# EUROPÄISCHE PATENTSCHRIFT

(11) **EP 1 693 560 B1**
(45) Veröffentlichungstag und Bekanntmachung des Hinweises auf die Patenterteilung: **26.09.2012**
(21) Anmeldenummer: 06101316.5
(22) Anmeldetag: 06.02.2006
(51) Int. Cl.: F02D 41/22, B01D 46/42, B01D 46/00, F02M 35/024

(54) **Vorrichtung zur Überwachung von Verschleißteilen**
Device for monitoring wearing parts
Dispositif de surveillance des pièces d'usure

(30) Priorität: 15.02.2005 DE 102005007020
(43) Veröffentlichungstag der Anmeldung: 23.08.2006
(73) Patentinhaber: MANN+HUMMEL GmbH, 71638 Ludwigsburg (DE)
(72) Erfinder: Dworatzek, Klemens, 68535 Edingen (DE); Nguyen, Duc Cuong, 30880 Laatzen (DE)

(56) Entgegenhaltungen:
- EP-A1- 1 048 336
- EP-A2- 0 925 959
- WO-A1-00/40322
- WO-A1-98/41306
- WO-A1-02/074418
- WO-A2-01/52185
- DE-A1- 19 627 595

## Beschreibung

### Technisches Gebiet

Die Erfindung betrifft eine Vorrichtung zur Überwachung von Verschleißteilen gemäß dem Oberbegriff des Anspruchs 1.

### Stand der Technik

Es ist bekannt, Wartungsschalter zu verwenden, welche Filterelemente in ihrer Funktion überwachen. Hierzu verfügt der Wartungsschalter über einen Sensor, welcher ein charakteristisches Funktionsmerkmal, z.B. den im Filtergehäuse herrschenden Druck erfasst. Der Wartungsschalter besitzt eine Spannungsversorgung und eine Datenleitung, welche mit einer Anzeige verbunden ist. Sobald die Funktion des Filterelements nicht mehr den Anforderungen entspricht, wird dies über die Datenleitung an die Anzeige gemeldet. Auf der Anzeige wird dann angezeigt, dass ein Austausch des Filterelements erforderlich ist. Nachteilig bei den bekannten Wartungsschaltern ist jedoch, dass keine Überprüfung des Filterelements selbst erfolgt. Somit können auch ungeeignete bzw. falsche Filterelemente eingebaut werden, welche unter Umständen eine Beschädigung an einer nachgeordneten Brennkraftmaschine verursachen können und diese nicht schützen.

Aus der DE 196 27 595 A1 ist ein Filter bekannt geworden, wobei die Filterpatrone einen elektronischen Speicher enthält.

Die WO 02/074418 A1 zeigt bereits einen Filter mit einem Lesegerät, einem Anzeigefeld, einem Differenzdruckmesser sowie einem Signalgeber, die alle in einem Gehäuseteil integriert sind.

Die EP 1 048 336 A1 offenbart einen Filter, bei welchem von einem Druckverlustsensor festgestellt wird wie stark das Filterelement verbraucht ist. Ein Sensor registriert einem Filterwechsel aufgrund eines Transponders im Filterelement und seht einem Integrator auf Null.

Aufgabe der Erfindung ist es daher, eine Vorrichtung zur Überwachung von Verschleißteilen zu schaffen, mit welcher sowohl die Funktion als auch das Verschleißteil selbst überwacht werden kann, wobei die Vorrichtung kostengünstig sein soll und einen geringen Bauraumbedarf aufweist. Diese Aufgabe wird durch die Merkmale des Patentanspruchs 1 gelöst.

### Offenbarung der Erfindung

Die erfindungsgemäße Vorrichtung zur Überwachung von Filterelementen weist einen Wartungsschalter auf. Der Wartungsschalter erfasst Kenndaten, welche das Verschleißteil beeinflusst. Je nach Zustand des Verschleißteils weichen die Kenndaten von den definierten Bereichen ab, wodurch die Notwendigkeit des Austauschens des Verschleißteils erfassbar ist. Hierzu ist der Wartungsschalter über eine Kabelleitung mit einer Anzeige verbunden. Weiterhin verfügt der Wartungsschalter über eine Spannungsversorgung, über welche die zum Betreiben des Wartungsschalters erforderliche Energie zuführbar ist. Die erfindungsgemäße Vorrichtung zur Überwachung von Filterelementen kann vorteilhaft in Kraftfahrzeugen, eingesetzt werden, da diese Vorrichtung nur einen kleinen Bauraum benötigt und einfach in einen Motorraum des Kraftfahrzeugs integriert werden kann. Besonders vorteilhaft kann die Überwachung von Filterelementen einer Brennkraftmaschine mit der erfindungsgemäßen Vorrichtung realisiert werden. Filterelemente im Sinne dieser Patentanmeldung sind Bauteile, welche bei bestimmungsgemäßem Gebrauch einer Abnutzung bzw. einem Verbrauch unterliegen. Hierzu zählen z. B. Filterelemente für die Ansaugluft oder den Ölkreislauf einer Brennkraftmaschine.

In dem Filterelement ist ein Chip angeordnet, welcher mit einem Lesegerät identifizierbar ist. Hierbei kann der Chip bei der Herstellung des Filterelements eingearbeitet werden. Eine Möglichkeit der Einarbeitung des Chips besteht darin, ihn bei der Herstellung eines Kunststoffteils mit dem Kunststoff zu umspritzen. Weiterhin kann der Chip aber auch auf die Außenseite des Filterelementen aufgeklebt, aufgeschraubt oder aufgeschnappt sein. Auf dem Chip sind spezielle Daten gespeichert, welche zur Identifizierung des Filterelements verwendet werden können. Hierbei können Herstellerdaten, wie z. B. Herstelldatum, Typenbezeichnung, fortlaufende Identifizierungsnummern oder Ähnliches gespeichert sein. Der Chip benötigt für die Speicherung der Daten in einem eingebauten Verschleißteil keine externe Energiequelle. Das Lesegerät ist derart ausgestaltet, dass es die Daten des in das Filterelement eingebauten Chips erfassen und auslesen kann. Somit ist durch das Lesegerät erfassbar, ob das vorschriftsmäßige Filterelement eingebaut ist oder nicht. Falls ein "falsches" Bauteil eingebaut ist, kann eine entsprechende Meldung ausgegeben werden, damit das vorschriftsmäßige Bauteil eingebaut werden kann. Hierbei kann die Meldung, dass ein " falsches" Bauteil eingebaut ist, auf einer Anzeige ausgegeben werden. Weiterhin ist es aber auch möglich, dass die Inbetriebnahme der Brennkraftmaschine verhindert wird, um eine Beschädigung derselben zu verhindern. Da das Lesegerät für die Erfassung der auf dem Chip gespeicherten Daten Energie benötigt, ist das Lesegerät mit der Spannungsversorgung des Wartungsschalters verbunden. Somit erübrigt sich die Notwendigkeit einer zusätzlichen Spannungsversorgung des Lesegeräts, wodurch zusätzliche Kabelführungen eingespart werden. Diese Einsparung wirkt sich positiv auf die Bauteilkosten, den erforderlichen Bauraum und die Montage der Vorrichtung aus. Weiterhin ist das Lesegerät in das Gehäuse des Wartungsschalters integriert. Dadurch muss nur ein einziges Bauteil montiert werden, und das Lesegerät ist ohne zusätzlichen Aufwand an der richtigen Stelle montiert.

Erfindungsgemäß verfügt das Lesegerät über eine Antenne, welche ebenfalls in den Wartungsschalter integriert ist. Somit ist die Antenne vor Beschädigungen geschützt und muss nicht gesondert montiert werden. Hierbei ist die Antenne an einer für die Erfassung der Chipdaten vorteilhaften Stelle im Wartungsschalter angeordnet. Diese Stelle ist idealerweise in dem dem Chip am nächsten liegenden Bereich angeordnet, wodurch die Antenne mit einer minimalen Leistung auskommt und keine umliegenden Bauteile stören kann.

Erfindungsgemäß ist das Lesegerät über die Kabelleitung des Wartungsanzeigers mit der Anzeige verbunden. Hierbei ist es technisch problemlos möglich, die Daten des Wartungsschalters von den Daten des Lesegerätes zu trennen, wodurch eine entsprechende Ausgabe auf der Anzeige erfolgen kann. Die Ausgabe der Daten kann auf einer gemeinsamen Anzeige erfolgen oder auf zwei getrennten Anzeigen, wobei die eine Anzeige die Funktionsfähigkeit des Verschleißteils und die andere Anzeige die Verwendung des vorschriftsmäßigen Verschleißteils anzeigt. Somit kann die Funktion des Verschleißteils unabhängig von der vorschriftsmäßigen Verwendung überprüft werden.

Erfindungsgemäß ist das Verschleißteil ein Filterelement, welches zur Reinigung eines Fluids in einer Brennkraftmaschine vorgesehen ist. Das zu reinigende Fluid kann z. B. die Ansaugluft oder das Öl einer Brennkraftmaschine sein. Durch die Integration des Lesegerätes in den Wartungsschalter ist die Überwachung derartiger Filterelemente kostengünstig und mit geringem Aufwand realisierbar, da diese Filterelemente bereits über einen Wartungsschalter mit den entsprechenden Spannungsversorgungs- bzw. Datenleitungen verfügen und so ohne zusätzlichen Bauraum eine Überwachung des eingebauten Filterelementes erhalten.

### Kurze Beschreibung der Zeichnungen

Weitere Einzelheiten der Erfindung werden nachfolgend anhand von schematischen Zeichnungen erläutert. Hierbei zeigt

Figur 1 eine Vorrichtung zur Überwachung von Verschleißteilen,

Figur 2 einen Wartungsschalter mit integriertem Lesegerät und

Figur 3 ein Filterelement im Schnitt.

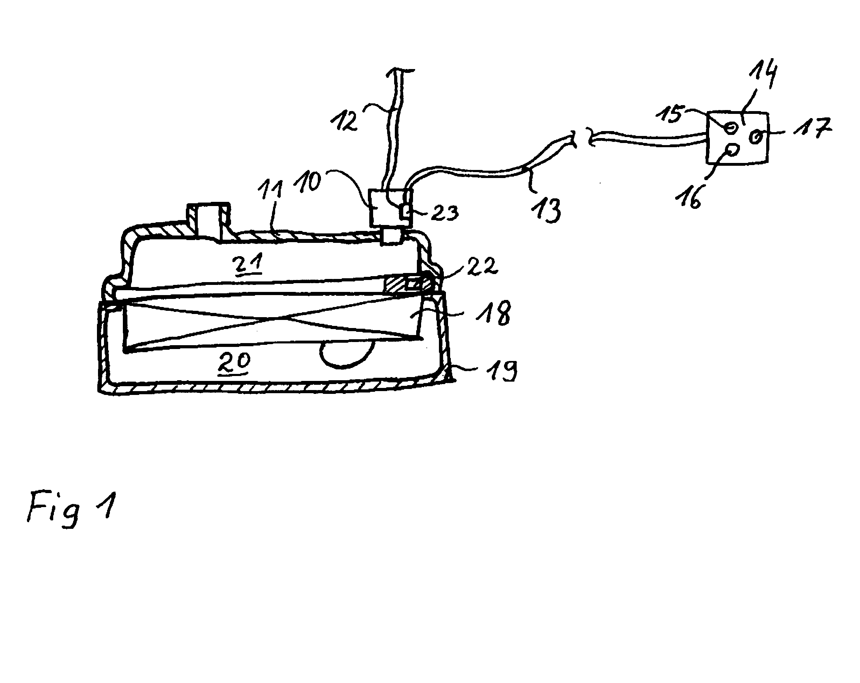

In Figur 1 ist eine Vorrichtung zur Überwachung von Verschleißteilen schematisch dargestellt. Die Vorrichtung verfügt über einen Wartungsschalter 10, welcher an einem Gehäuseoberteil 11 fixiert ist. Der Wartungsschalter 10 verfügt über eine Spannungsversorgung 12. Die Spannungsversorgung 12 ist eine Leitung, welche eine Spannungs- bzw. Energiequelle (nicht dargestellt) mit dem Wartungsschalter 10 verbindet. Weiterhin verfügt der Wartungsschalter über eine Datenleitung 13, welche den Wartungsschalter 10 mit einer Anzeige 14 verbindet. Diese Datenleitung 13 ist - wie dargestellt - eine Kabelleitung. Die Anzeige 14 verfügt bei diesem Beispiel über eine rote Diode 15, eine grüne Diode 16 und eine gelbe Diode 17. Die rote und grüne Diode 15, 16 ist mit dem Wartungsschalter 10 verbunden, wobei diese Dioden 15, 16 den überwachten Zustand eines Filterelementes 18 anzeigen. Das Filterelement 18 ist zwischen dem Gehäuseoberteil 11 und einem Gehäuseunterteil 19 angeordnet, wodurch eine Rohseite 20 dichtend von einer Reinseite 21 getrennt ist. Solange das Filterelement 18 in einem funktionsfähigen Zustand ist, wird dieser Zustand von dem Wartungsschalter erfasst und an die Anzeige 14 gesendet. Als optische Erkennung, dass das Filterelement 18 sich in einem ordnungsgemäßen Zustand befindet, leuchtet die grüne Diode 16. Sobald das Filterelement 18 verschmutzt bzw. seine Funktion beeinträchtigt ist, wird dieser Zustand von dem Wartungsschalter 10 erfasst und an die Anzeige 14 gesendet, wodurch die rote Diode 15 aufleuchtet. Dies zeigt an, dass das Filterelement 18 ausgetauscht werden muss.

Das Filterelement 18 verfügt über einen integrierten Chip 22, auf welchem elementspezifische Daten gespeichert sind. Über ein in den Wartungsschalter 10 integriertes Lesegerät 23 werden die auf dem Chip gespeicherten Daten gelesen und ausgewertet. Das Lesegerät 23 ist mit der Spannungsversorgung 12 verbunden, wodurch eine ausreichende Energie für den Lese- bzw. Auswertevorgang zur Verfügung steht. Weiterhin ist das Lesegerät mit der Datenleitung 13 verbunden, wodurch die von dem Lesegerät 23 erfassten Daten an die Anzeige 14 gesendet werden können. Wenn die von dem Lesegerät 23 erfassten Daten den vorgeschriebenen Daten entsprechen, erfolgt keine Warnung an der Anzeige. Falls die erfassten Daten den Vorgaben nicht entsprechen, wird über die Datenleitung 13 ein Signal an die Anzeige 14 gesendet, wodurch die gelbe Diode 17 blinkt. Somit ist es optisch erfassbar, ob ein vorschriftsmäßiges Filterelement in das Gehäuse 11, 19 eingebaut ist oder nicht. Die Anzeige 14 kann selbstverständlich auch über andere im Stand der Technik bekannte optische oder akustische Ausgabemittel verfügen, um den Filterzustand bzw. das Verwenden des vorschriftsmäßigen Filterelements 18 anzuzeigen.

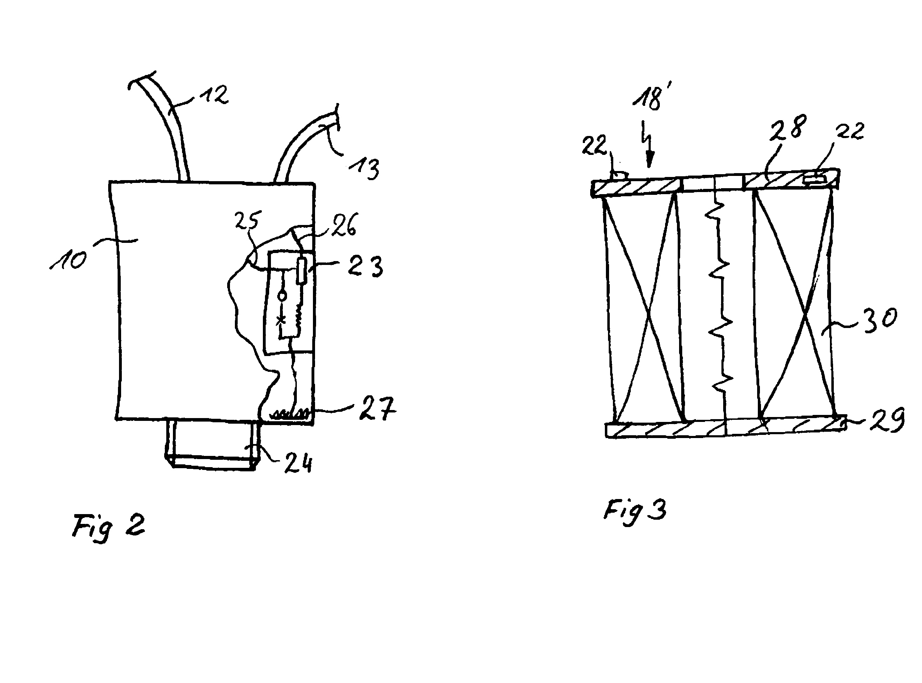

In Figur 2 ist ein Wartungsschalter 10 schematisch dargestellt. Der Figur 1 entsprechende Bauteile sind mit gleichen Bezugszeichen versehen. Der Wartungsschalter 10 verfügt über einen Gewindeanschluss 24, mit welchem der Wartungsschalter 24 an dem Gehäuseoberteil 11 (gemäß Figur 1) fixiert werden kann. Das Lesegerät 23 ist über ein Kabel 25 mit der Spannungsversorgung 12 verbunden. Ein weiteres Kabel 26 verbindet das Lesegerät 23 mit der Datenleitung 13. In den Wartungsschalter 10 ist eine Antenne 27 integriert, welche mit dem Lesegerät 23 verbunden ist. Die Antenne 27 ist derart ausgestaltet, dass sie die von dem Chip 22 (gemäß Figur 1 bzw. 3) ausgesendeten Signale erfassen kann. Hierzu ist die Antenne 27 im unteren Bereich des Wartungsschalters 10 angeordnet, wodurch die zu überbrückende Distanz zwischen Chip 22 und Antenne 27 möglichst gering gehalten werden kann. Bei anderen Ausgestaltungen ist die Antenne 27 direkt auf dem Lesegerät 23 angeordnet, wodurch ein Verbindungskabel von der Antenne zum Lesegerät 23 entfallen kann.

In Figur 3 ist ein Filterelement 18' im Schnitt dargestellt. Das Filterelement 18' ist als Rundfilterelement mit einer oberen Endscheibe 28 und einer unteren Endscheibe 29 dargestellt. Zwischen den Endscheiben 28, 29 erstreckt sich ein Filtermedium 30, welches zur Reinigung des Fluids vorgesehen ist.

Der Chip 22 ist auf der linken Bildhälfte auf die obere Endscheibe 28 des Filterelements 18' aufgeklebt, wodurch dieser unlösbar mit der Endscheibe 28 verbunden ist.

Auf der rechten Bildhälfte ist der Chip 22 in die obere Endscheibe 28 eingearbeitet. Dies kann z. B. beim Herstellen der oberen Endscheibe 28 erfolgen. Hierbei kann der Chip 22 in das Spritzgusswerkzeug eingelegt werden und der Kunststoff für die Endscheibe wird um den Chip 22 herumgespritzt. Alternativ hierzu könnte auch eine Aussparung in der Endscheibe 28 vorgesehen sein, in welche der Chip 22 eingelegt und die Aussparung anschließend verschlossen wird.

## Patentansprüche

1. Vorrichtung zur Überwachung von Filterelementen (18) zur Reinigung eines Fluids einer Brennkraftmaschine, aufweisend einen Wartungsschalter (10), welcher den im Filtergehäuse herrschenden Druck erfasst und über eine Spannungsversorgung (12) und eine Kabelleitung (13) verfügt, wobei die Kabelleitung (13) mit einer Anzeige (14) verbunden ist, wobei mit dem Wartungsschalter (10) die Funktion des Verschleißteils (18) überprüfbar ist, **dadurch gekennzeichnet, dass** in dem Verschleißteil (18) ein Chip (22) angeordnet ist, welcher mit einem Lesegerät (23) identifizierbar ist, wobei das Lesegerät (23) in den Wartungsschalter (10) integriert ist und mit der Spannungsversorgung (12) verbunden ist, wobei das Lesegerät (23) über eine Antenne (27) verfügt, welche in den Wartungsschalter (10) integriert ist und wobei das Lesegerät (23) über die Kabelleitung (13) des Wartungsanzeigers mit der Anzeige (14) verbunden ist, und wobei die Daten des Wartungsschalters von den Daten des Lesegerätes getrennt sind.

2. Vorrichtung nach Anspruch 1, **dadurch gekennzeichnet, dass** die Ausgabe der Daten auf einer gemeinsamen Anzeige erfolgt.

3. Vorrichtung nach Anspruch 1, **dadurch gekennzeichnet, dass** die Ausgabe der Daten auf zwei getrennten Anzeigen erfolgt, wobei die eine Anzeige die Funktionsfähigkeit des Verschleißteils und die andere Anzeige die Verwendung des vorschriftsmäßigen Verschleißteils anzeigt.

## Claims

1. Apparatus for monitoring filter elements (18) for cleaning a fluid of an internal combustion engine, featuring a maintenance switch (10) which detects the pressure prevailing in the filter housing and which has a power supply system (12) and a cable duct (13), the cable duct (13) being connected with a display (14), the function of the wear part (18) being verifiable with the maintenance switch (10), **characterized in that** a chip which is identifiable with a reading device (23) (22) is disposed in the wear part (18), the reading device (23) being integrated in the maintenance switch (10) and connected with the power supply system (12), the reading device (23) having an antenna (27) which is integrated in the maintenance switch (10), and the reading device (23) being connected with the display (14) via the cable duct (13) of the service indicator, and the data of the maintenance switch being separated from the data of the reading device.

2. Apparatus according to claim 1, **characterized in that** the output of the data is realized on a common display.

3. Apparatus according to claim 1. **characterized in that** the output of the data is realized on two separate displays, one display showing the proper functioning of the wear part and the other display showing the utilization of the wear part according to instructions.

## Revendications

1. Dispositif de surveillance d'éléments filtrants (18) pour le nettoyage d'un fluide d'un moteur à combustion interne, présentant un interrupteur d'entretien (10) qui mesure la pression régnant dans le boîtier de filtre et dispose d'une alimentation en tension (12) et d'un conduit de câble (13), le conduit de câble (13) étant relié à un afficheur (14), l'interrupteur d'entretien (10) permettant de contrôler l'aptitude au fonctionnement de la pièce d'usure (18), **caractérisé en ce qu'**une puce (22) qui peut être identifiée avec un lecteur (23) est placée dans la pièce d'usure (18), le lecteur (23) étant intégré dans l'interrupteur d'entretien (10) et relié à l'alimentation en tension (12), le lecteur (23) étant pourvu d'une antenne (27) qui est intégrée dans l'interrupteur d'entretien (10), et le lecteur (23) étant relié à l'afficheur (14) par le conduit de câble (13) de l'afficheur d'entretien, et les données de l'interrupteur d'entretien étant séparées des données du lecteur.

2. Dispositif selon la revendication 1, **caractérisé en ce que** la sortie des données a lieu sur un afficheur commun.

3. Dispositif selon la revendication 1, **caractérisé en ce que** la sortie des données a lieu sur deux afficheurs distincts, un des afficheurs visualisant l'aptitude au fonctionnement de la pièce d'usure et l'autre afficheur visualisant l'utilisation de la pièce d'usure conformément aux directives.
